# EUROPÄISCHE PATENTSCHRIFT

(11) **EP 2 607 774 B1**
(45) Veröffentlichungstag und Bekanntmachung des Hinweises auf die Patenterteilung: **12.07.2017**
(21) Anmeldenummer: 12193815.3
(22) Anmeldetag: 22.11.2012
(51) Int. Cl.: F21S 8/10, F21V 13/04, F21S 8/12, F21V 7/00, F21V 8/00

(54) **Kraftfahrzeugbeleuchtungseinrichtung mit einer langen und flachen leuchtenden Fläche**
Motor vehicle lighting device with a long and flat luminescent area
Dispositif d'éclairage d'un véhicule automobile avec une surface lumineuse longue et plane

(30) Priorität: 21.12.2011 DE 102011089481
(43) Veröffentlichungstag der Anmeldung: 26.06.2013
(73) Patentinhaber: Automotive Lighting Reutlingen GmbH, 72762 Reutlingen (DE)
(72) Erfinder: Gebauer, Matthias, Dr., 72770 Reutlingen (DE); Kellermann, Hermann, 72762 Reutlingen (DE)
(74) Vertreter: DREISS Patentanwälte PartG mbB

(56) Entgegenhaltungen:
- EP-A1- 2 169 296
- EP-A2- 1 726 479
- DE-A1- 19 925 363
- DE-A1-102006 008 199
- JP-A- 2006 049 232
- US-A1- 2006 274 621
- US-A1- 2007 145 395
- US-A1- 2010 232 172

## Beschreibung

Die vorliegende Erfindung betrifft eine Kraftfahrzeug-Beleuchtungseinrichtung nach dem Oberbegriff des Anspruchs 1.

Eine solche Beleuchtungseinrichtung ist aus der gattungsgemäßen US 2010/0232172 A1 bekannt. Aus der US 2006/0274621 A1 ist ein plattenförmiger Lichtleiter bekannt, der Licht einer Lichtquelle über eine Breitseite einkoppelt und über eine Schmalseite auskoppelt. Ein erster Reflektor weist eine Vielzahl von ersten Reflexionsflächen auf, die von der Lichtquelle her einfallendes Licht auf zweite Reflexionsflächen lenken, die das Licht zur Schmalseite lenken. Die US 2010/0232172 A1 geht ihrerseits von einem konzentrischen ersten Reflektor und einem zweiten Reflektor aus, der eine parabolische Außenkontur des Lichtleiters bildet. Der erste Reflektor beleuchtet dann den zweiten Reflektor und mit einem Teil des auf den ersten Reflektor auftreffenden Lichtes. Dieser Teil wird durch den parabolischen zweiten Reflektor in erwünschter Weise parallelisiert. Dies funktioniert nur in einem Winkelbereich von bis zu 180°, da der in dem übrigen 180°-Bereich eine unerwünschte Richtungsumkehr stattfinden würde.

In diesem übrigen 180°-Bereich findet keine Parallelisierung durch den zweiten Reflektor statt. Als Folge trifft das von dem ersten Reflektor in diesen Winkelbereich reflektierte Licht in ungeordneter Weise auf eine Lichtaustrittsfläche des Lichtleiters, so dass dort Lichtverluste durch unerwünschte interne Totalreflexionen oder durch Brechungen in Richtungen auftreten, die nicht zur erwünschten Lichtverteilung (Photometrie) der Beleuchtungseinrichtung beitragen.

Um solche Verluste zu begrenzen und damit die Effizienz der Beleuchtungseinrichtung zu verbessern, wird in der US 2010/0232172 A1 vorgeschlagen, die Rotationssymmetrie des ersten Reflektors zu brechen und das nicht auf den zweiten Reflektor auftreffende Licht durch den ersten Reflektor so umzulenken, dass dieses Licht in Richtungen kanalisiert wird, die zur erwünschten Photometrie beitragen.

Der bei der US 2010/0232172 A1 verwendete zweite Reflektor besitzt eine Form die ihn Licht direkt zur Lichtaustrittsfläche richten lässt. Dies setzt voraus, dass der zweite Reflektor eine gewisse Parallelisierung erzeugt, wie sie insbesondere durch eine parabolische Form des zweiten Reflektors (vergleiche auch Fig. 6 der US 2010/0232172 A1) erzeugt wird. Darüber hinaus ist nach der US 2010/0232172 A1 eine Einkoppeloptik in Form einer weiteren Vertiefung im Lichtleiter vorgesehen, die rotationssymmetrisch ist und deren Rotationsachse mit einer Achse der ersten Vertiefung zusammenfällt. Die zweite Vertiefung liegt also in der zweiten Seite des Lichtleiters gerade gegenüber zur Vertiefung in der ersten Seite, die den ersten Reflektor bildet.

Nach dem Absatz 39 der US 2010/0232172 A1 ist diese Anordnung besonders vorteilhaft, weil sie einem Mangel an Homogenität des Lichtes entgegenwirkt, der durch die Präsenz der Lichtquelle im Strahlengang hervorgerufen werden könnte. Dieser so definierte Mangel wird nach der US 2010/0232172 A1 dadurch vermindert, dass Lichtstrahlen, die von einem hinter der Lichtquelle liegenden Bereich des zweiten Reflektors reflektiert werden, zum Teil durch die Einkoppeloptik verdeckt werden.

Ein solches Verdecken geht natürlich zu Lasten der angestrebten Effizienz. Vor diesem Hintergrund besteht die Aufgabe der Erfindung in der Angabe einer Beleuchtungseinrichtung der eingangs genannten Art, die sich durch eine weiter verbesserte Effizienz auszeichnet. Dabei wird unter einer Effizienz hier der Anteil des in den Lichtleiter eingespeisten Lichtes verstanden, der am Ende tatsächlich zur Erzeugung der erwünschten Lichtverteilung beiträgt.

Diese Aufgabe wird mit den Merkmalen des Anspruchs 1 gelöst. Von dem eingangs genannten Stand der Technik unterscheidet sich die vorliegende Erfindung insbesondere dadurch, dass der weitere Weg des umgelenkten Lichtes zwischen dem ersten Reflektor und der zweiten Seite hindurch an dem ersten Reflektor vorbei führt.

Die Erfindung führt das Licht daher gerade über Wege, die beim Gegenstand der US 2010/0232172 A1 durch die Einkoppeloptik versperrt sein würden. Darüber hinaus ergibt sich ein Unterschied auch dadurch, dass der zweite Reflektor beim Gegenstand der US 2010/0232172 A1 eine parallelisierende Wirkung besitzt. Eine Umlenkung, die zu einer Richtungsumkehr führt, wird dadurch ausgeschlossen. Wie die weiter unten noch folgende detaillierte Beschreibung zeigt, stellt die Erfindung einen größeren Anteil des eingekoppelten Lichtes als Nutzlicht zur Erzeugung einer gewünschten Lichtverteilung zur Verfügung als der Stand der Technik und besitzt damit eine verbesserte Effizienz. Erfindungsgemäß ist der zweite Reflektor dazu eingerichtet, die Richtung des auf ihn einfallenden Lichtes bei der Umlenkung umzukehren, wobei die Umlenkung so erfolgt, dass der weitere Weg des umgelenkten Lichtes zwischen dem ersten Reflektor und der zweiten Seite hindurch an dem ersten Reflektor in einem Abstand zur ersten Seite vorbei führt, der für den größten Teil des reflektierten Lichtes wenigstens der bestimmten Tiefe des ersten Reflektors entspricht. Die erfindungsgemäße Ausgestaltung zeichnet sich dadurch aus, dass die bestimmte Tiefe der Vertiefung einem Wert zwischen 40% und 60% des am Ort der Vertiefung herrschenden Abstandes zwischen der ersten Seite und der zweiten Seite entspricht.

Erfindungsgemäß besitzt die Vertiefung eine rotationssymmetrische Form.

Ferner ist bevorzugt, dass die Lichtquelle in Relation zum ersten Reflektor so angeordnet ist, dass sie in einer Verlängerung einer Rotationsachse des ersten Reflektors liegt und dass der erste Reflektor eine radiale Ausdehnung besitzt, die gerade so groß ist, dass seine Reflexionsfläche vollständig von dem von der Lichtquelle in den Lichtleiter eingekoppelten Licht beleuchtet wird.

Eine weitere bevorzugte Ausgestaltung zeichnet sich dadurch aus, dass die Vertiefung den Lichtleiter in einen ersten Halbraum und einen zweiten Halbraum teilt, wobei der erste Halbraum zwischen einem ersten Teil des ersten Reflektors und einer in einer Schmalseite des Lichtleiters liegenden Lichtaustrittsfläche des Lichtleiters liegt, und wobei der zweite Halbraum zwischen einem zweiten Teil des ersten Reflektors und dem zweiten Reflektor liegt.

Bevorzugt ist auch, dass der Lichtleiter aus Polycarbonat (PC) besteht. In einer Ausgestaltung ist das PC farblos und glasklar. In anderen Ausgestaltungen ist es so eingefärbt, dass es eine Signalfarbe für eine farbiges Licht nutzende Lichtfunktion wie zum Beispiel Bremslicht oder Blinklicht besitzt.

Ferner ist bevorzugt, dass der erste Reflektor wenigstens abschnittsweise rotationssymmetrisch ist und sich insgesamt aus einzelnen Abschnitten zusammensetzt, die innerhalb eines bestimmten Winkelbereiches rotationssymmetrisch sind, wobei die Summe der Winkelbereiche wieder einen Vollkreis ergibt.

Bevorzugt ist auch, dass die reflektierende Fläche des ersten Reflektors so geformt ist, dass von der Lichtquelle her auf sie einfallendes Licht dort interne Totalreflexionen erfährt.

Ferner ist bevorzugt, dass der zweite Halbraum in einer zu der Rotationsachse des ersten Reflektors senkrechten Ebene eine zur Rotationsachse des ersten Reflektors konzentrische, Kreisausschnitts-förmige Kontur aufweist, die den zweiten Reflektor begrenzt.

Bevorzugt ist auch, dass der zweite Reflektor in einer zu seiner Kreisausschnitts-förmigen Kontur senkrechten Ebene eine V-förmige Kontur aufweist, wobei die Spitze des V nach außen weist und einen 90° Winkel bildet und ein Schenkel des Winkels mit der ersten Seite einen Winkel von 45° einschließt und der andere Schenkel des Winkels mit der zweiten Seite einen Winkel von 45 ° einschließt.

Weitere Vorteile ergeben sich aus Unteransprüchen, der Beschreibung und den beigefügten Figuren.

Es versteht sich, dass die vorstehend genannten und in nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: eine perspektivische Ansicht eines Lichtleiters, der eine Plattenform besitzt;
- Fig. 2: ein Ausführungsbeispiel der Erfindung in Form einer Kraftfahrzeugbeleuchtungseinrichtung in einer Schnittdarstellung;
- Fig. 3: eine Ausgestaltung eines Lichtleiters mit einem ersten Reflektor;
- Fig. 4: eine Draufsicht auf ein Ausführungsbeispiel eines erfindungsgemäßen Lichtleiters;
- Fig. 5: eine weitere Ausgestaltung eines Lichtleiters in einer Draufsicht, die der Blickperspektive aus der Figur 4 entspricht;
- Fig. 6: eine weitere Ausgestaltung eines Lichtleiters in einer Draufsicht, die der Blickperspektive aus der Figur 4 entspricht;
- Fig. 7: eine Ausgestaltung, die sich dadurch auszeichnet, dass die Lichtaustrittsfläche in einzelne Stufen unterteilt ist, deren Einhüllende eine gekrümmte Linie ergibt;
- Fig. 8: eine Draufsicht auf eine nicht strukturierte Lichtaustrittsfläche;
- Fig. 9: das Erscheinungsbild einer leuchtenden Lichtaustrittsfläche, die mit streuenden Zylindern und/oder Kissen belegt ist; und
- Fig. 10: eine Ausgestaltung mit einer aus einzelnen Abschnitten zusammengesetzten Lichtaustrittsfläche;

Dabei bezeichnen gleiche Bezugszeichen in den verschiedenen Figuren jeweils gleiche oder zumindest ihrer Funktion nach gleiche Elemente.

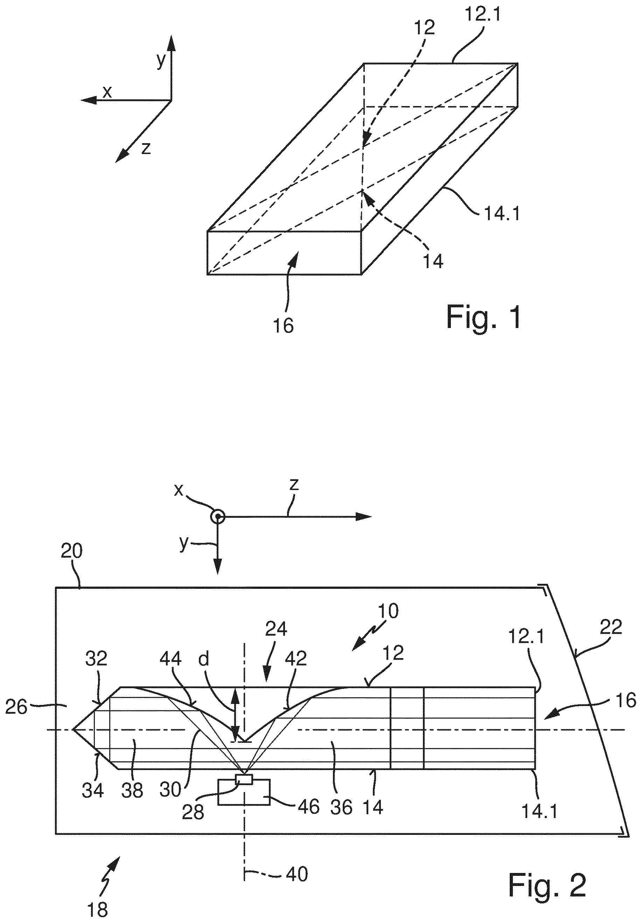

Figur 1 zeigt eine perspektivische Ansicht eines Lichtleiters 10, der eine Plattenform besitzt. Der Lichtleiter 10 weist eine erste Seite 12 und eine der ersten Seite 12 gegenüberliegende zweite Seite 14 auf. Im Vergleich zu den übrigen vier Begrenzungsflächen handelt es sich bei der ersten Seite 12 und der zweiten Seite 14 um breitere und ausgedehntere Flächen. Die erste Seite 12 wird von einem umlaufenden Rand 12.1 begrenzt. Die Seite 14 wird von einem umlaufenden Rand 14.1 begrenzt. Zwischen dem Rand der ersten Seite 12 und dem Rand der zweiten Seite 14 liegen Schmalseiten, die jeweils die erste Seite 12 mit der zweiten Seite 14 verbinden. Die Abmessungen der ersten Seite 12, der zweiten Seite 14 und der Schmalseiten prägen das Erscheinungsbild des Lichtleiters 10 als Lichtleiterplatte.

Eine vergleichbare Lichtleiterplatte wird im Rahmen der vorliegenden Erfindung so verwendet, dass Licht über ihre zweite Seite 14 in das Volumen des Lichtleiters 10 eingekoppelt und durch Reflexion und Brechung so auf eine als Lichtaustrittsseite dienende Schmalseite gerichtet wird, dass das Licht dort ausgekoppelt wird. In der Figur 1 soll dies die Schmalseite 16 sein. Es ist ein Ziel der Erfindung, diese als Lichtaustrittsfläche dienende Schmalseite 16 in definierter Weise und möglichst effizient, also mit einem möglichst hohen Anteil am eingekoppelten Licht, zu beleuchten.

In Bezug auf die Lichtaustrittsfläche 16 und den im Licht davor liegenden Lichtleiter 10 wird die x-Richtung als Richtung einer Länge, die y-Richtung als Richtung einer Breite und die z-Richtung als Richtung einer Tiefe definiert. Die Angabe dieser Richtungen in den verschiedenen Figuren stellt daher einen Bezug zwischen den Ausrichtungen der jeweils dargestellten Gegenstände her.

In bevorzugten Ausgestaltungen ist die Länge der Lichtaustrittsfläche größer als deren vierfache Breite, insbesondere größer als deren sechsfache Breite und besonders bevorzugt, größer als deren achtfache Breite. Diese Angaben beziehen sich dabei jeweils auf ein Lichtleitervolumen, das von einer Lichtquelle, sei es eine einzelne Halbleiterlichtquelle oder eine räumlich zusammengefasste Anordnung mehrerer Halbleiterlichtquellen, gebildet wird.

Sofern mehrere räumlich voneinander getrennte Lichtquellen verwendet werden, wird ein Lichtleitervolumen jeder Lichtquelle zugeordnet, wobei eine solche Anordnung als Elementarzelle betrachtet wird. In einem solchen Fall ist bevorzugt, dass die oben angegebenen Verhältnisse für jede Elementarzelle gelten.

Moderne Kraftfahrzeugbeleuchtungseinrichtungen liefern Signallicht-Lichtverteilungen und/oder Scheinwerfer-Lichtverteilungen. Eine Signallicht-Lichtverteilung dient dazu, anderen Verkehrsteilnehmern die Anwesenheit eines Kraftfahrzeugs und/oder die Absichten seines Fahrers anzuzeigen. Scheinwerfer-Lichtverteilungen sollen dagegen Objekte im Fahrweg des Kraftfahrzeuges beleuchten und damit für den Fahrer wahrnehmbar machen. Das Erzeugen einer Lichtverteilung wird auch als Lichtfunktion bezeichnet. Häufig erfüllt eine Beleuchtungseinrichtung mehrere Lichtfunktionen mit Hilfe von einem oder mehreren Lichtmodulen, die in einer solchen Beleuchtungseinrichtung angeordnet sind.

Die hier vorgestellte Erfindung erfüllt bevorzugt Signallichtfunktionen, insbesondere eine Tagfahrlicht-Lichtfunktion oder eine Blinklicht-Lichtfunktion. Dabei spielt es keine Rolle, ob erfindungsgemäße Beleuchtungseinrichtungen neben einer durch die Erfindung erfüllten Lichtfunktion noch weitere Lichtfunktionen erfüllen. Ausgestaltungen erfindungsgemäßer Beleuchtungseinrichtungen können daher insbesondere separate Bugleuchten für Blinklicht- oder Tagfahrlicht-Lichtfunktionen sein, oder es kann sich um mehrere Lichtfunktionen erfüllende Frontscheinwerfer oder auch Heckleuchten handeln.

Die Figur 2 zeigt im Einzelnen ein Ausführungsbeispiel der Erfindung in Form einer Kraftfahrzeugbeleuchtungseinrichtung 18 in einer Schnittdarstellung. Die Kraftfahrzeugbeleuchtungseinrichtung 18 weist einen Lichtleiter 10 auf. Mit Bezug auf die im Zusammenhang mit der Figur 1 angegebenen Richtungen liegt die Schnittebene der Figur 2 in einer y-z-Ebene des Lichtleiters 10. Die Kraftfahrzeugbeleuchtungseinrichtung 18 weist ein Gehäuse 20 mit einer Lichtaustrittsöffnung auf, die von einer transparenten Abdeckscheibe 22 abgedeckt wird. Im Gehäuse 20 befindet sich ein Lichtleiter 10, der eine erste Seite 12, eine der ersten Seite gegenüberliegende zweite Seite 14 und zwischen einem Rand 12.1 der ersten Seite 12 und einem Rand 14.1 der zweiten Seite 14 liegende Schmalseiten aufweist.

Der Lichtleiter 10 weist ferner einen ersten Reflektor 24 und einen zweiten Reflektor 26 auf. Der erste Reflektor 24 ist eine Vertiefung in der ersten Seite 12, die sich bis zu einer bestimmten Tiefe d in y-Richtung in den Lichtleiter 10 hinein erstreckt. Eine Lichtquelle 28 ist in sehr geringem Abstand zur zweiten Seite 14 an der zweiten Seite 14 so angeordnet, dass ihr Licht über die zweite Seite 14 in den Lichtleiter 10 eingekoppelt wird und auf den ersten Reflektor 24 fällt. Unter einem sehr geringen Abstand wird dabei ein Abstand verstanden, der kleiner als 1 Millimeter ist. Der erste Reflektor 24 ist dazu eingerichtet, einen Teil des auf ihn einfallenden Lichtes der Lichtquelle 28 radial auf den zweiten Reflektor 26 zu richten. In einer Ausgestaltung, die eine solche radiale Ausrichtung bewirkt, ist der erste Reflektor 24 so ausgestaltet, dass er in x-z-Ebenen jeweils Kreislinien als Schnittkurven aufweist und in y-z-Ebenen jeweils eine Randkurve aufweist, die so schräg zum Licht der Lichtquelle 28 liegt, dass sie solches Licht in Richtung zum zweiten Reflektor 26 umlenkt.

Der zweite Reflektor 26 ist dazu eingerichtet, die Richtung des auf ihn von dem ersten Reflektor 24 aus einfallenden Lichtes zweifach umzulenken. Die Figur 2 veranschaulicht diese zweifache Umlenkung am Beispiel eines Strahlenganges 30. Das im Strahlengang 30 von der Lichtquelle 28 ausgehende Licht wird, nachdem es über die zweite Seite 14 des Lichtleiters 10 in den Lichtleiter eingekoppelt worden ist, zunächst durch den ersten Reflektor 24 so umgelenkt, dass es auf den zweiten Reflektor 26 fällt. Der zweite Reflektor 26 weist eine erste Reflexionsfläche 32 und eine gegenüber der ersten Reflexionsfläche 32 geneigte zweite Reflexionsfläche 34 auf.

Die erste Reflexionsfläche 32 ist relativ zu dem im Strahlengang 30 propagierenden Licht so geneigt, dass dieses Licht durch die erste Reflexionsfläche 32 zur zweiten Reflexionsfläche 34 hin umgelenkt wird. Die zweite Reflexionsfläche 34 ist gegenüber der ersten Reflexionsfläche 32 und dem Strahlengang 30 so geneigt, dass die zweite Reflexionsfläche 34 das Licht im Strahlengang 30 so reflektiert, dass seine Richtung insgesamt, das heißt durch die Summe der beiden im zweiten Reflektor 26 auftretenden Reflexionen, umgekehrt wird. Die Umkehrung erfolgt dabei in radialer Richtung, so dass das Licht antiparallel zu der Richtung zurück läuft, aus der es vom ersten Reflektor aus auf den zweiten Reflektor reflektiert worden war.

Das Licht nimmt aber nicht den gleichen Weg, sondern es läuft in y-Richtung versetzt zurück. Dies ergibt sich durch die zweifache Reflexion am zweiten Reflektor 26, der das Licht durch die zwischen beiden Reflexionen in y-Richtung zurückgelegte Wegstrecke in y-Richtung versetzt. Die y-Richtung liegt insbesondere quer zur Hauptabstrahlrichtung, die etwa mit der z-Richtung übereinstimmt. Die Umlenkung des Lichtes am zweiten Reflektor 26 erfolgt insbesondere so, dass der weitere Weg des umgelenkten Lichtes zwischen dem ersten Reflektor 24 und der zweiten Seite 14 des Lichtleiters 10 hindurch an dem ersten Reflektor 24 in einem Abstand zur ersten Seite 12 vorbei führt, der für den größten Teil des am zweiten Reflektor 26 reflektierten Lichtes wenigstens der bestimmten Tiefe d des ersten Reflektors entspricht.

In der Darstellung der Figur 2 läuft dieser Anteil unter dem ersten Reflektor 24 hindurch. Wie groß der Anteil des auf diese Weise am ersten Reflektor 24 vorbeilaufenden Lichtes ist, hängt auch von der bestimmten Tiefe d ab, bis zu der sich der erste Reflektor in y-Richtung in den Lichtleiter 10 hinein erstreckt. Außerdem hängt dieser Anteil auch davon ab, auf welcher Höhe in y-Richtung die beiden Reflexionsflächen 32 und 34 des zweiten Reflektors 26 aufeinander stoßen. In einer bevorzugten Ausgestaltung entspricht die bestimmte Tiefe d des ersten Reflektors 24 dem halben Abstand zwischen der ersten Seite 12 und der zweiten Seite 14 des Lichtleiters 10, und die beiden Reflexionsflächen 32 und 34 des zweiten Reflektors 26 stoßen auf der Höhe dieser bestimmten Tiefe d aufeinander.

Dann wird alles Licht, das vom ersten Reflektor 24 auf den zweiten Reflektor 26 umgelenkt und von diesem in y-Richtung versetzt zurück reflektiert wird, zwischen dem ersten Reflektor 24 und der zweiten Seite 14 hindurch laufen. Im Ergebnis führt die Erfindung dazu, dass der erste Reflektor 24 den Lichtleiter 10 gewissermaßen in einen ersten Halbraum 36 und einem zweiten Halbraum 38 aufteilt. In der Figur 2 werden diese beiden Halbräume 36 und 38 durch die strichpunktierte Linie 40 getrennt. Diese Linie 40 kann auch als Rotationsachse des ersten Reflektors und auch des zweiten Reflektors betrachtet werden.

Der erste Halbraum 36 liegt zwischen einem ersten Teil 42 des ersten Reflektors 24 und einer in einer Schmalseite liegenden Lichtaustrittsfläche 16 des Lichtleiters 10. Der zweite Halbraum 38 liegt zwischen einem zweiten Teil 44 des ersten Reflektors 24 und dem zweiten Reflektor 26. Der zweite Halbraum 38 liegt damit insbesondere auf einer der Lichtaustrittsfläche 16 abgewandten Seite des ersten Reflektors 24.

Der erste Reflektor 24 teilt auch das von der Lichtquelle 28 ausgehende Lichtbündel auf den ersten Halbraum 36 und den zweiten Halbraum 38 auf.

Die Lichtquelle 28 ist bevorzugt eine Halbleiterlichtquelle, insbesondere eine einzelne LED oder eine räumliche Zusammenfassung mehrerer LEDs zu einer Lichtquelle. Die Lichtquelle ist mit einem zur elektrischen Kontaktierung dienenden Schaltungsträger auf einem Kühlkörper 46 angeordnet, der die im Betrieb der Halbleiterlichtquelle anfallende Wärme aus dem Chip abführt. Jede einzelne LED besitzt bevorzugt eine quadratische oder rechteckige und ebene Lichtaustrittsfläche mit einer Kantenlänge zwischen 0,3 Millimeter und 2 Millimeter. Solche Halbleiterlichtquellen können näherungsweise als Lambert-Strahler betrachtet werden, die ihr Licht über einen Winkelbereich von 90 Grad zu einer Normalen der LED-Lichtaustrittsfläche in einen Halbraum mit Raumwinkel 2n emittieren.

Durch die beim Einkoppeln des Lichtes in das optisch dichtere Lichtleitermaterial des Lichtleiters 10 auftretende Brechung verkleinert sich der Öffnungswinkel von 90 Grad auf den für das jeweilige Lichtleitermaterial gültigen Winkel der internen Totalreflexion. Für übliche Lichtleitermaterialien wie PC (Polycarbonat) und PMMA (Polymethylmethacrylat) liegt der Wert dieses Winkels bei 39 Grad (PC) und 42 Grad (PMMA).

In Relation zum ersten Reflektor 24 ist die Lichtquelle 28 bevorzugt so angeordnet, dass sie bei einem rotationssymmetrischen ersten Reflektor 24 in der Verlängerung der Rotationsachse des ersten Reflektors 24 liegt. Der erste Reflektor 24 besitzt dabei bevorzugt eine radiale Ausdehnung, die gerade so groß ist, dass seine Reflexionsfläche vollständig von dem von der Lichtquelle 28 in den Lichtleiter 10 eingekoppelten Licht beleuchtet wird.

Dadurch wird das Lichtbündel der Lichtquelle 28 vollständig vom ersten Reflektor 24 erfasst. Da dieses Licht letztlich zur Lichtaustrittsfläche 16 umgelenkt wird, ist dies für eine gute Effizienz vorteilhaft. Andererseits sollte der erste Reflektor 24 in radialer Richtung auch nicht unnötig groß sein, weil eine Ausdehnung in radialer Richtung bei der Funktion des ersten Reflektors 24 auch mit einer Ausdehnung in y-Richtung einher gehen würde.

Ein in y-Richtung größerer Reflektor erfordert einen entsprechend dickeren Lichtleiter. Dies würde jedoch dem angestrebten Ziel einer in y-Richtung möglichst schmalen Lichtaustrittsfläche zuwider laufen, da der Lichtleiter 10, um unerwünschte Auskopplungen zu vermeiden, sich zur Lichtaustrittsfläche hin allenfalls erweitern, nicht aber verjüngen sollte. Unerwünschte Auskopplungen würden die angestrebte hohe Effizienz verringern.

Es ist daher besonders bevorzugt, dass der Lichtleiter 10 aus PC besteht. PC hat im Vergleich zu PMMA einen kleineren Grenzwinkel der internen Totalreflexion. Dies bedeutet, dass der Lichtkegel, der den ersten Reflektor 24 im Lichtleiter 10 beleuchtet, bei PC einen kleineren Öffnungswinkel hat. Dann ist auch ein in z-Richtung und in y-Richtung kleinerer erster Reflektor 24 in der Lage, den ganzen Lichtkegel zu erfassen.

Der erste Reflektor 24 teilt also das von der Lichtquelle 38 ausgehende und sich kegelförmig um eine y-Richtung herum im Lichtleiter 10 ausbreitende Licht auf die beiden Halbräume 36 und 38 auf. In einer bevorzugten Ausgestaltung wird das Licht dabei durch die Reflexion am ersten Reflektor 24 parallelisiert. Diese Parallelisierung erfolgt dabei in allen möglichen radialen Richtungen, so dass das Licht in jeder Ebene, die durch einen Radius des rotationssymmetrischen Reflektors 24 und seiner Rotationsachse aufgespannt wird, parallelisiert ist.

In den zu der Rotationsachse des ersten Reflektors 24 senkrechten Ebenen ändert sich die Winkelverteilung des Lichtes durch die Reflexion am ersten Reflektor 24 dagegen nicht. Nach der Reflexion am ersten Reflektor 24 wird das Licht radial von der Rotationsachse 40 des ersten Reflektors 24 wegweisend in einen Vollkreis abgestrahlt. Nach der Reflexion am ersten Reflektor 24 propagiert das Licht sowohl im ersten Halbraum 36 als auch zweiten Halbraum 38 zunächst innerhalb eines Teilvolumens des Lichtleiters 10, der durch seine erste Seite 12 begrenzt wird und bis zu der bestimmten Tiefe d in y-Richtung in das Volumen des Lichtleiters 10 hineinreicht. Allerdings propagiert das Licht im zweiten Halbraum 38 gewissermaßen in die falsche Richtung, nämlich von der Lichtaustrittsfläche 16 weg.

Durch die bereits beschriebene zweifache Umlenkung am zweiten Reflektor 26 wird auch das zunächst in den zweiten Halbraum 38 reflektierte Licht in den ersten Halbraum 36 gerichtet. Dadurch, dass der zweite Reflektor 26 dazu eingerichtet ist, die Richtung des auf ihn einfallenden Lichtes umzukehren, besitzt das am zweiten Reflektor 26 reflektierte Licht im ersten Halbraum 36 letztlich die gleiche Winkelverteilung, wie sie in dem direkt vom ersten Reflektor 24 in den ersten Halbraum 36 reflektierten Licht herrscht. Im Unterschied zu dem Licht, dass vom ersten Reflektor 24 in den ersten Halbraum 36 reflektiert wurde und das nur in der oberen Hälfte des Lichtleitervolumens propagiert, bildet das zunächst in den zweiten Halbraum 38 reflektierte und an dem zweiten Reflektor 26 zweimal umgelenkte Licht ein Lichtbündel im ersten Halbraum 36, das in der unteren Hälfte des Lichtleiters 10 propagiert. Es propagiert in y-Richtung also in einem Volumen, das zu demjenigen Volumen komplementär oder spiegelbildlich liegt, in dem das andere Lichtbündel propagiert. Im Ergebnis hat man damit erreicht, dass ein sehr großer Anteil, wenn nicht sogar alles Licht der Lichtquelle 28 in dem Lichtleiter 10 mit einer definierten Winkelverteilung in allen zur x-z-Ebene parallelen Ebenen und mit paralleler Ausrichtung in der y-z-Ebene und allen anderen radialen Richtungen zur Verfügung steht.

Dies ist ein großer Vorteil, da sich das aus zwei Teilbündeln zusammen gesetzte Lichtbündel anschließend gut durch weitere Maßnahmen homogen und parallel auf die Lichtaustrittsfläche 16 verteilen lässt, wo es in definierter Weise ausgekoppelt werden kann.

Um eine radiale Abstrahlung des vom ersten Reflektor 24 reflektierten Lichtes der Lichtquelle 28 zu erreichen, muss der erste Reflektor 24 nicht zwingend über einen ganzen Vollkreis rotationssymmetrisch sein. Es reicht, wenn er abschnittsweise rotationssymmetrisch ist.

Die in der Figur 2 sichtbare Schnittlinie des ersten Reflektors 24 mit der y-z-Ebene ergibt sich bei einem Radialschnitt durch den zumindest abschnittsweise rotationssymmetrischen ersten Reflektor 24. Diese Schnittlinie hat bevorzugt eine Form, die durch die Forderung bestimmt ist, dass von der Lichtquelle 28 divergent ausgehendes und auf dem ersten Reflektor 24 auftreffendes Licht durch Reflexion möglichst weitgehend parallelisiert wird.

Eine vollständige Parallelisierung ergibt sich zum Beispiel für eine punktförmige Lichtquelle und parabelförmige Schnittlinie, wenn die Lichtquelle in einem Punkt liegt, der unter Berücksichtigung der beim Lichteintritt an der zweiten Seite erfolgenden Brechung, in dem Brennpunkt der parabelförmigen Grenzlinie liegt.

Da die Lichtquelle auch bei einer ebenen Lichteintrittsfläche, schon aus thermischen Gründen, einen gewissen Mindestabstand zur Lichteintrittsfläche aufweisen muss, wird die Form des ersten Reflektors 24 unter der Voraussetzung, dass das reflektierte Licht parallel ausgerichtet sein soll, nicht einer reiner Parabelform entsprechen. Eine bevorzugte Ausgestaltung sieht für diese Fälle eine der Parabelform ähnliche Freiformfläche vor, die flächenelementweise so berechnet und geformt ist, dass sie paralleles Licht abgibt.

Die reflektierende Fläche ist darüber hinaus bevorzugt so geformt, dass das von der Lichtquelle 28 her auf sie einfallende Licht dort interne Totalreflexionen erfährt. Alternativ oder ergänzend ist die reflektierende Fläche des ersten Reflektors 24 verspiegelt, beispielsweise durch eine darauf aufgebracht Metallschicht. Dies gilt analog für alle in dieser Anmeldung genannten reflektierenden Flächen. Es ist jedoch bevorzugt, diese Flächen, soweit es die Winkelverhältnisse jeweils erlauben, als intern totalreflektierende Grenzflächen auszugestalten, weil bei internen Totalreflexionen weniger Verluste auftreten als an verspiegelten Grenzflächen, was für das angestrebte Ziel einer hohen Effizienz hilfreich ist.

Um eine radiale Abstrahlung des vom ersten Reflektor 24 reflektierten Lichtes der Lichtquelle 28 über 360° zu erreichen, muss der erste Reflektor nicht zwingend über einen ganzen Vollkreis rotationssymmetrisch sein. Es reicht, wenn er abschnittsweise rotationssymmetrisch ist, sodass er sich insgesamt aus einzelnen Abschnitten zusammensetzt, die innerhalb eines bestimmten Winkelbereiches rotationssymmetrisch sind, wobei die Summe der Winkelbereiche wieder einen Vollkreis ergibt.

Die in der Figur 2 sichtbare Schnittlinie 42, 44 des ersten Reflektors 24 mit der y-z-Ebene in der Figur 2 hat bevorzugt eine Form, die durch die Forderung bestimmt ist, dass von der Lichtquelle divergent ausgehendes und auf die Schnittlinie auftreffendes Licht durch Reflexion an der Schnittlinie möglichst weitgehend parallelisiert wird. Diese Schnittlinie ergibt sich bei einem Radialschnitt durch den zumindest abschnittsweise rotationssymmetrischen ersten Reflektor 24. Eine vollständige Parallelisierung ergibt sich zum Beispiel für eine punktförmige Lichtquelle und eine parabelförmige Schnittlinie, wenn die Lichtquelle in einem Punkt liegt, der, unter Berücksichtigung der beim Lichteintritt an der zweiten Seite erfolgenden Brechung, in dem Brennpunkt der parabelförmigen Grenzlinie oder Schnittlinie liegt.

Da die Lichtquelle auch bei einer ebenen Lichteintrittsfläche einen gewissen Mindestabstand zur Lichteintrittsfläche aufweisen muss, was schon aus thermischen Gründen erforderlich ist, wird die Form des ersten Reflektors 24 unter der Voraussetzung, dass das reflektierte Licht parallel ausgerichtet sein soll, nicht einer reinen Parabelform entsprechen. Eine Ausgestaltung sieht für diese Fälle eine der Parabelform ähnliche Freiformfläche vor, die flächenelementweise so berechnet und geformt ist, dass sie paralleles Licht abgibt.

Die reflektierende Fläche des ersten Reflektors ist darüber hinaus bevorzugt so geformt, dass das von der Lichtquelle her auf sie einfallende Licht dort interne Totalreflexionen erfährt. Alternativ oder ergänzend ist die reflektierende Fläche des ersten Reflektors 24 verspiegelt, beispielsweise durch eine darauf aufgebrachte Metallschicht. Dies gilt analog für alle in dieser Anmeldung genannten reflektierenden Flächen. Es ist jedoch bevorzugt, die Flächen, soweit es die Winkelverhältnisse jeweils erlauben, als intern total reflektierende Grenzflächen auszugestalten, weil bei internen Totalreflexionen weniger Verluste auftreten als bei Reflexionen an verspiegelten Grenzflächen.

Dies ist für das angestrebte Ziel einer hohen Effizienz vorteilhaft.

Eine weitere bevorzugte Ausgestaltung zeichnet sich dadurch aus, dass die Lichteintrittsfläche des Lichtleiters 10, also der Teilbereich der zweiten Fläche 14, über den das Licht der Lichtquelle 28 in den Lichtleiter 10 eingekoppelt wird, eben ist.

Eine alternative Ausgestaltung zeichnet sich dadurch aus, dass die Lichteintrittsfläche des Lichtleiters 10 nicht eben ist. Dabei ist besonders bevorzugt, dass die Lichteintrittsfläche konvex gewölbt ist. Dies hat den Vorteil, dass der Öffnungswinkel des Lichtes, das in den Lichtleiter 10 eingekoppelt wird, schmaler ist als bei einer ebenen Lichteintrittsfläche. Wie weiter oben ausgeführt worden ist, kann bei schmalerem Öffnungswinkel insgesamt ein in y-Richtung weniger breiter Lichtleiter verwendet werden, was im Hinblick auf die angestrebte flache und längliche Form der Lichtaustrittsfläche vorteilhaft ist. Natürlich muss das Querschnittsprofil des ersten Reflektors 24 dann entsprechend angepasst werden.

Alternativ bevorzugt ist eine konkave Ausgestaltung der Lichteintrittsfläche. Dies hat den Vorteil einer besonders effektiven Einkopplung, während bei konvexer Einkoppelfläche Randbereiche des von der Lichtquelle zunächst in die Luft ausgehenden Lichtbündels verloren gehen können. Allgemein gilt, dass das Querschnittsprofil des ersten Reflektors 24 auf die Form der in der zweiten Seite 14 liegenden Einkoppelfläche angepasst werden sollte, um eine hohe Effizienz und/oder einen möglichst flachen Lichtleiter 10 zu erhalten.

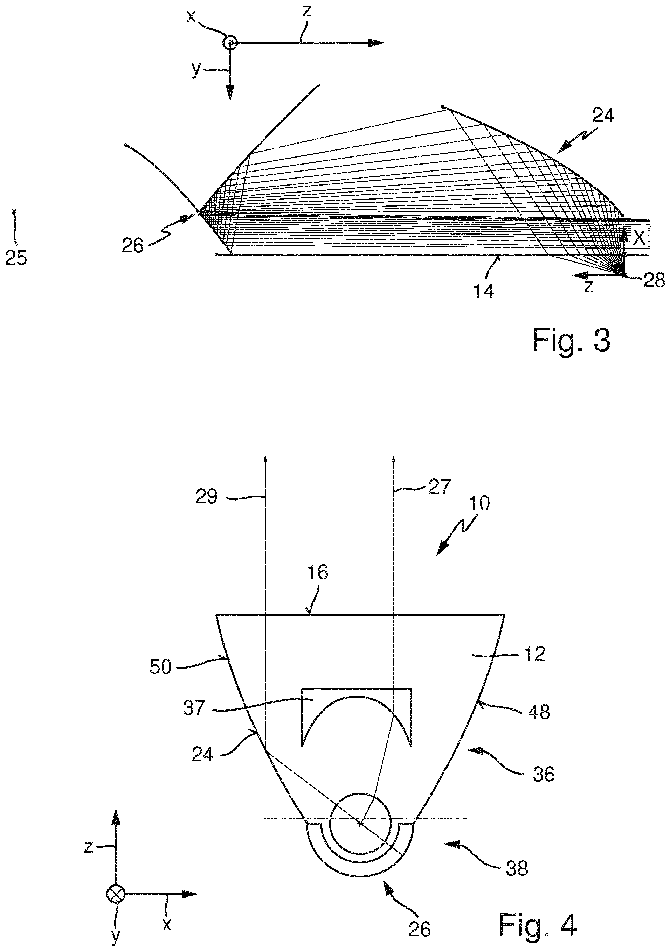

Figur 3 zeigt schematisiert optische Flächen, beziehungsweise Kanten einer Ausgestaltung eines Lichtleiters 10 mit einem ersten Reflektor 24, der dazu eingerichtet ist, in Verbindung mit einer ebenen Lichteintrittsfläche Licht auf einen Brennpunkt 25 zu fokussieren. Die Blickrichtung entspricht dabei der Blickrichtung aus der Fig. 2. Bei einer solchen Ausgestaltung ist bevorzugt, dass eine oder auch beide Reflexionsflächen das vom ersten Reflektor 24 fokussierte Licht in paralleles Licht umwandeln. Diese Ausgestaltung hat den Vorteil, dass ein in y-Richtung schmales Lichtbündel aus parallelem Licht in Verbindung mit einem in y-Richtung relativ breiten ersten Reflektor erzielt werden kann.

Figur 4 zeigt eine Draufsicht auf ein Ausführungsbeispiel eines erfindungsgemäßen Lichtleiters 10, also eine Ansicht, bei der ein Betrachter in y-Richtung auf die erste Seite 12 des Lichtleiters 10 schaut. Figur 4 zeigt insbesondere einen in dieser Ansicht kreisförmigen ersten Reflektor 24 und einen dazu konzentrisch angeordneten und kreisförmigen zweiten Reflektor 26 zusammen mit zwei Strahlengängen. Ein erster Strahlengang 27 repräsentiert das vom ersten Reflektor 24 direkt in den ersten Halbraum 36 reflektierte Licht der Lichtquelle 28. Ein zweiter Strahlengang 29 repräsentiert das vom ersten Reflektor 24 zunächst in den zweiten Halbraum 38 reflektierte Licht, dessen Richtung am zweiten Reflektor 26 umgekehrt wird. Figur 4 zeigt auch, dass beide Strahlengänge beim Eintritt in den ersten Halbraum 36 in Bezug auf die konzentrisch angeordneten Reflektoren 24, 26 radial ausgerichtet sind. Das bedeutet, dass die beiden weiter oben beschriebenen Lichtbündel, nämlich das Lichtbündel aus direkt in den ersten Halbraum 36 reflektiertem Licht und das Lichtbündel aus Licht, dass erst am zweiten Reflektor 26 reflektiert werden muss, um in den ersten Halbraum 36 zu gelangen, die gleiche Winkelverteilung aufweisen. Figur 4 veranschaulicht ferner, wie das in der x-z-Ebene zunächst noch radial ausstrahlende Licht beider Lichtbündel auch in dieser Ebene parallelisiert wird.

Beim Gegenstand der Figur 4 erfolgt eine solche Parallelisierung sowohl durch Reflexion als auch durch Brechung. Der Lichtleiter 10 zeichnet sich durch eine zentral im ersten Halbraum 36 liegende Ausnehmung 37 auf, die für Licht, das in einem zentralen Bereich des ersten Halbraums 36 des Lichtleiters propagiert, wenigstens eine brechende Kante definiert. Der erste Strahlengang 27 repräsentiert solches Licht. Die Ausnehmung 37 ist dazu eingerichtet, mit ihrer wenigstens einen brechenden Kante 39 wie eine Sammellinse zu wirken, die das radial divergent auf sie einfallende Licht parallelisiert.

Der Lichtleiter 10 zeichnet sich ferner durch reflektierende Kanten, beziehungsweise Flächen aus, die ebenfalls dazu eingerichtet sind, radial divergent im ersten Halbraum 36 propagierendes Licht zu parallelisieren. Beim Gegenstand der Figur 4 sind die reflektierenden Kanten 48, 50 als Außenkonturen des Lichtleiters 10 ausgestaltet. Sie besitzen bevorzugt die Form von Parabelabschnitten, wobei der Brennpunkt der Parabelabschnitte mit dem Mittelpunkt des konzentrisch kreisförmigen ersten Reflektors 24 und zweiten Reflektors 26 zusammenfällt. Die Parabelabschnitte und die als Linse wirkende Ausnehmung sind bevorzugt so angeordnet, dass jedes dieser drei Licht richtenden Elemente genau einem Winkelteilbereich des im ersten Halbraum 36 radial divergent propagierenden Lichtes zugeordnet ist.

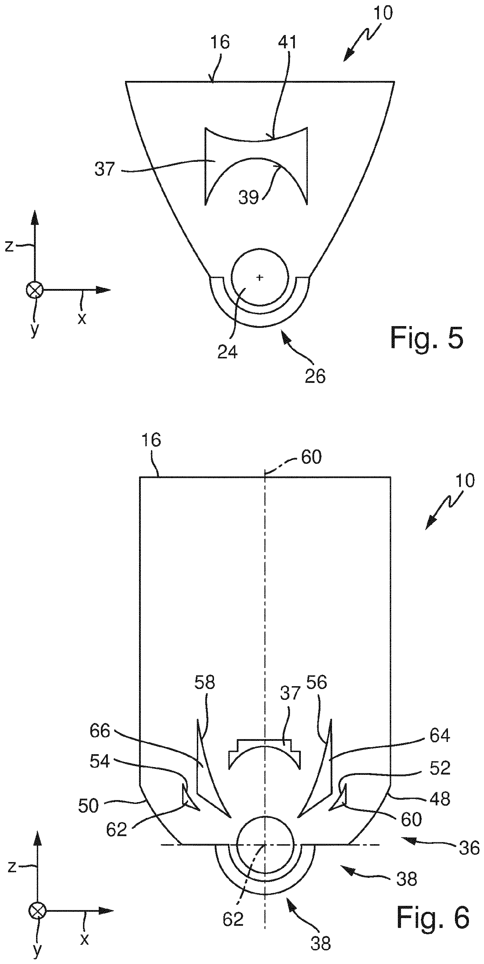

Figur 5 zeigt eine weitere Ausgestaltung eines Lichtleiters 10 in einer Draufsicht, die der Blickperspektive aus der Figur 4 entspricht. Der Gegenstand der Figur 5 unterscheidet sich vom Gegenstand der Figur 4 dadurch, dass die zentrale Ausnehmung 37 zwei brechende Kanten 39, 41 aufweist, sodass die Licht brechende Wirkung dieser Linse auf die beiden Kanten, beziehungsweise die von diesen Kanten begrenzten Flächen, aufgeteilt wird.

Figur 6 zeigt eine weitere Ausgestaltung eines Lichtleiters 10 in einer Draufsicht, die der Blickperspektive aus der Figur 4 entspricht. Beim Gegenstand der Figur 6 wurden zusätzlich zur zentral angeordneten, in Form einer Ausnehmung 37 realisierten Linse, einzelne Parabelabschnitte 48, 50, 52, 54, 56, 58 zur Parallelisierung in x-z-Richtung verwendet. Dabei werden die Parabelabschnitte nur zum Teil durch Außenkonturen 48, 50 des Lichtleiters 10 definiert. Die Anordnung der Parabelabschnitte ist symmetrisch zu einer zentralen optischen Achse 60, die durch den Mittelpunkt 62 des ersten Reflektors 24 und des zweiten Reflektors 26 sowie durch die Lichtaustrittsfläche 16 geht. Dies gilt im Übrigen auch für die anderen in dieser Anmeldung vorgestellten Ausgestaltungen von Lichtleitern 10.

Die innerhalb des Lichtleiters 10 liegenden Parabelabschnitte 52, 54, 56, 58 sind als Begrenzungsflächen von Ausnehmungen 60, 62, 64, 66 im Lichtleitermaterial verwirklicht. Die Steigung der Parabelabschnitte (Δz/Δx) nimmt dabei, von Parabelabschnitt zu Parabelabschnitt betrachtet, von außen nach innen ab. Beim Gegenstand der Figur 6 haben die am weitesten außen liegenden Parabelabschnitte 48, 50, die durch Außenkonturen gebildet werden, eine kleinere Steigung als die weiter innen liegenden Parabelabschnitte 52, 54, 56, 58, die sich als Ränder von Ausnehmungen ergeben. Dies ist gerade umgekehrt zur Veränderung der Steigung einer zusammenhängenden Parabel. Dort liegen die Abschnitte mit kleineren Steigungen innen, und die Abschnitte mit größeren Steigungen liegen außen.

Eine zusammenhängende Parabel erzeugt aus Licht, das von ihrem Brennpunkt ausgeht, eine Lichtverteilung, die in der Mitte heller als außen ist. Eine solche Lichtverteilung ist daher in Bezug auf die Helligkeit inhomogen. Diese Inhomogenität wird beim Gegenstand der Figur 6 dadurch verringert, das Parabelabschnitte mit vergleichsweise kleinerer Steigung, die bei einer zusammenhängenden Parabel die vergleichsweise größere Helligkeit erzeugen, weiter außen angeordnet sind, während Parabelabschnitte mit vergleichsweise größerer Steigung, die bei einer zusammenhängenden Parabel die vergleichsweise kleineren Helligkeiten erzeugen, weiter innen angeordnet sind. Dadurch wird insgesamt eine Homogenisierung der Helligkeit des von den Parabelabschnitten insgesamt abgestrahlten Lichtes erzielt. Die einzelnen Parabelabschnitte sind dabei nicht Teile einer einzigen Parabel. Sie sind vielmehr dadurch definiert, dass sie alle denselben Brennpunkt aufweisen, nämlich den Mittelpunkt 62 der kreisförmigen und konzentrisch angeordneten Reflektoren 24 und 26.

Diese Ausgestaltung hat den Vorteil, dass die Homogenität der Helligkeit der Lichtverteilung, wie sie im Lichtleiter 10 nach der Parallelisierung in der x-z-Ebene herrscht, gegenüber der Ausgestaltung nach den Figuren 4 und 5 verbessert ist. Im Ergebnis wird die lange und flache Lichtaustrittsfläche 16 des Lichtleiters mit parallelem Licht sehr homogen ausgeleuchtet.

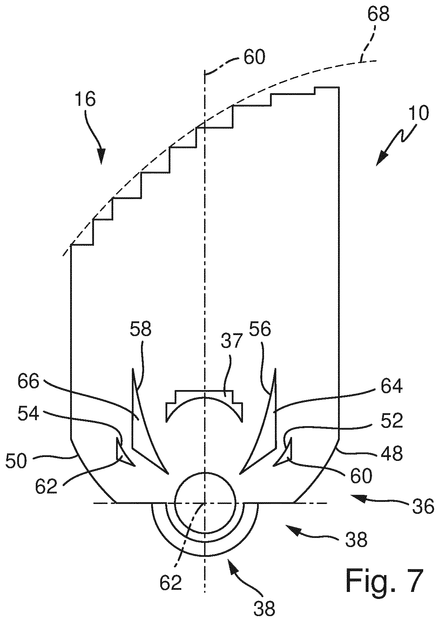

Figur 7 zeigt eine Ausgestaltung, die sich dadurch auszeichnet, dass die Lichtaustrittsfläche 16 in einzelne Stufen unterteilt ist, deren Einhüllende 68 eine gekrümmte Linie ergibt. Durch diese Ausgestaltung kann die Erfindung auch bei Beleuchtungseinrichtungen verwendet werden, die aus gestalterischen Gründen oder aufgrund von technischen Notwendigkeiten gekrümmte Formen von Lichtaustrittsflächen aufweisen sollen. Die Aufteilung in Stufen erlaubt insbesondere eine Anpassung der Form der Lichtaustrittsfläche an gekrümmte Formen von Beleuchtungseinrichtungen, ohne dass die erwünschte Krümmung eine unerwünschte Brechung und damit eine unerwünschte Richtungsänderung erzeugen würde. Durch die gestufte Form ändert sich der Einfallswinkel des Lichtes im Lichtleiter auf die Lichtaustrittsfläche nicht. Im Vergleich zu einer nicht-gekrümmten und keine Stufe aufweisenden Lichtaustrittsfläche ergibt sich dann auch keine veränderte Brechung an der Lichtaustrittsfläche. Das Erzielen einer mittleren Krümmung durch einen gestuften Verlauf hat also den Vorteil, dass die Richtung des ausgekoppelten Lichtes nicht von einer lokalen Krümmung eines glatt gekrümmten Lichtleiters beeinflusst wird.

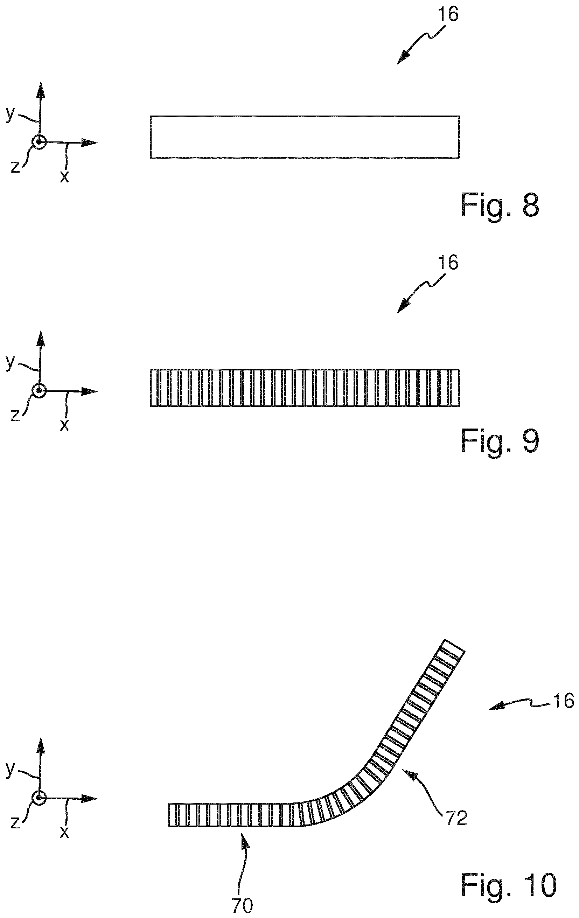

Figur 8 zeigt eine Draufsicht auf eine Lichtaustrittsfläche 16 des Lichtleiters 10. Die Darstellung der Lichtaustrittsfläche weist dabei keine Struktur auf. Dies soll die Homogenität der Ausleuchtung einer solchen Lichtaustrittsfläche eines Lichtleiters 10 verdeutlichen. Durch die homogene Ausleuchtung der Lichtaustrittsfläche mit parallel ausgerichtetem Licht lässt sich die Auswirkung von streuenden und/oder brechenden Strukturen, die man auf Ausgestaltungen der Lichtaustrittsfläche aufbringt, anformt oder anderweitig erzeugt, zum Beispiel durch ein Abtragen von Material, gut vorherbestimmen.

Dies vereinfacht den Entwurf von Kraftfahrzeugbeleuchtungseinrichtungen und ergibt auch ein vorteilhaft homogenes Erscheinungsbild der strukturierten Lichtaustrittsfläche im unbeleuchteten Zustand. Vorteilhaft ist auch, dass die Belegung der Lichtaustrittsfläche des Lichtleiters 10 mit solchen Strukturen dann auch im beleuchteten Zustand ein sehr gleichmäßiges Erscheinungsbild ergibt, weil jede Struktur etwa gleich beleuchtet wird und damit gleiche Wirkung entfaltet wie eine gleiche Struktur, die an einem anderen Ort der Lichtaustrittsfläche angeordnet ist.

Figur 9 verdeutlicht das Erscheinungsbild einer leuchtenden Lichtaustrittsfläche, die mit streuenden Zylindern und/oder Kissen belegt ist, um eine vorbestimmte, gesetzeskonforme Lichtverteilung zu erzielen. Eine bevorzugte Ausgestaltung zeichnet sich also dadurch aus, dass die Lichtaustrittsfläche mit Zylindern, Kissen oder Freiformflächen belegt ist, um eine erwünschte Lichtverteilung zu erzielen.

Figur 10 zeigt eine Ausgestaltung, bei der ein zusammenhängender Lichtleiter eine Lichtaustrittsfläche aufweist, die zwei gerade oder nur wenig gekrümmte Abschnitte 70, 72 aufweist, die durch einen stärker gekrümmten Abschnitt miteinander verbunden werden. Jeder dieser Abschnitte entspricht dabei einer Elementarzelle, wie sie weiter oben beschrieben worden ist. Während der stufenförmige Verlauf der Lichtaustrittsfläche nach der Figur 8 dazu diente, eine gekrümmte Leuchtenform in y-z-Richtung zu ermöglichen, zeigt die Ausgestaltung der Figur 9, das auch Ausgestaltungen mit Krümmungen in der x-y-Ebene möglich sind.

## Patentansprüche

1. Kraftfahrzeug-Beleuchtungseinrichtung (18) mit einem Lichtleiter (10), der eine erste Seite (12), eine der ersten Seite gegenüberliegende zweite Seite (14) und zwischen einem Rand (12.1) der ersten Seite und einem Rand (14.1) der zweiten Seite liegende und die erste Seite mit der zweiten Seite verbindende Schmalseiten sowie einen ersten Reflektor (24) und einen zweiten Reflektor (26) aufweist, wobei der erste Reflektor eine Vertiefung in der ersten Seite ist, die sich bis zu einer bestimmten Tiefe (d) in den Lichtleiter hinein erstreckt, **dadurch gekennzeichnet, dass** die Vertiefung eine rotationssymmetrische Form besitzt und die bestimmte Tiefe der Vertiefung einem Wert zwischen 40% und 60% des am Ort der Vertiefung herrschenden Abstandes zwischen der ersten Seite und der zweiten Seite entspricht, und dass eine Lichtquelle (28) auf der Rotationsachse der Vertiefung so angeordnet ist, dass ihr Licht über die zweite Seite in den Lichtleiter einkoppelt und auf den ersten Reflektor fällt, so dass der erste Reflektor auf ihn einfallendes Licht radial auf den zweiten Reflektor richtet, und wobei der zweite Reflektor dazu eingerichtet ist, dieses Licht zweifach umzulenken und die Richtung des auf ihn einfallenden Lichtes bei der Umlenkung umzukehren, wobei die Umlenkung so erfolgt, dass der weitere Weg des umgelenkten Lichtes zwischen dem ersten Reflektor und der zweiten Seite hindurch an dem ersten Reflektor vorbei führt.

2. Kraftfahrzeug-Beleuchtungseinrichtung (18) nach einem der vorhergehenden Ansprüche, **dadurch gekennzeichnet, dass** die Lichtquelle (28) in Relation zum ersten Reflektor (24) so angeordnet ist, dass sie in einer Verlängerung einer Rotationsachse des ersten Reflektors liegt und dass der erste Reflektor eine radiale Ausdehnung besitzt, die gerade so groß ist, dass seine Reflexionsfläche vollständig von dem von der Lichtquelle in den Lichtleiter eingekoppelten Licht beleuchtet wird.

3. Kraftfahrzeug-Beleuchtungseinrichtung (18) nach einem der vorhergehenden Ansprüche, **dadurch gekennzeichnet, dass** die Vertiefung den Lichtleiter in einen ersten Halbraum (36) und einen zweiten Halbraum (38) teilt, wobei der erste Halbraum zwischen einem ersten Teil des ersten Reflektors und einer in einer Schmalseite des Lichtleiters liegenden Lichtaustrittsfläche (16) des Lichtleiters liegt, und wobei der zweite Halbraum zwischen einem zweiten Teil (44) des ersten Reflektors und dem zweiten Reflektor liegt.

4. Kraftfahrzeug-Beleuchtungseinrichtung (18) nach einem der vorhergehenden Ansprüche, **dadurch gekennzeichnet, dass** der Lichtleiter aus Polycarbonat besteht.

5. Kraftfahrzeug-Beleuchtungseinrichtung (18) nach einem der vorhergehenden Ansprüche, **dadurch gekennzeichnet, dass** der erste Reflektor wenigstens abschnittsweise rotationssymmetrisch ist und sich insgesamt aus einzelnen Abschnitten zusammensetzt, die innerhalb eines bestimmten Winkelbereiches rotationssymmetrisch sind, wobei die Summe der Winkelbereiche wieder einen Vollkreis ergibt.

6. Kraftfahrzeug-Beleuchtungseinrichtung (18) nach einem der vorhergehenden Ansprüche, **dadurch gekennzeichnet, dass** die reflektierende Fläche des ersten Reflektors so geformt ist, dass von der Lichtquelle her auf sie einfallendes Licht dort interne Totalreflexionen erfährt.

7. Kraftfahrzeug-Beleuchtungseinrichtung (18) nach einem der vorhergehenden Ansprüche, **dadurch gekennzeichnet, dass** der zweite Halbraum in einer zu der Rotationsachse des ersten Reflektors senkrechten Ebene eine zur Rotationsachse des ersten Reflektors konzentrische, Kreisausschnitts-förmige Kontur aufweist, die den zweiten Reflektor begrenzt.

8. Kraftfahrzeug-Beleuchtungseinrichtung (18) nach Anspruch 7, **dadurch gekennzeichnet, dass** der zweite Reflektor in einer zu seiner Kreisausschnitts-förmigen Kontur senkrechten Ebene eine V-förmige Kontur aufweist, wobei die Spitze des V nach außen weist und einen 90° Winkel bildet und ein Schenkel des Winkels mit der ersten Seite einen Winkel von 45° einschließt und der andere Schenkel des Winkels mit der zweiten Seite einen Winkel von 45 ° einschließt.

9. Kraftfahrzeug-Beleuchtungseinrichtung (18) nach einem der vorhergehenden Ansprüche, **dadurch gekennzeichnet, dass** der weitere Weg des umgelenkten Lichtes zwischen dem ersten Reflektor und der zweiten Seite hindurch an dem ersten Reflektor in einem Abstand zur ersten Seite vorbei führt, der wenigstens der bestimmten Tiefe des ersten Reflektors entspricht.

## Claims

1. Motor vehicle-illumination device (18) comprising a light guide (10) having a first side (12), a second side (14) opposite to the first side and narrow sides arranged between a first side's boundary (12.1) and second side's boundary (14.1) and connecting the first side with the second side, comprising a first reflector (24) and a second reflector (26), wherein the first reflector is an indentation in the first side, which extends into the light guide down to a certain depth (d),
**characterized in that** the indentation has a rotation symmetric form and the indentation's certain depth corresponds to a value between 40% and 60% of the distance between the first side and the second side at the indentation's location, and that a light source (28) is arranged on the indentation's rotation axis such that its light couples into the light guide via the second side and is incident on the first reflector, such that the first reflector directs light incident on the first reflector radially onto the second reflector, and wherein the second reflector is adapted to deflect said light twice and to reverse the direction of the light incident on the second reflector reflector by the deflection, wherein the reversal is effected such that the reversed light's further path leads through between the first reflector and the second reflector past the first reflector.

2. Motor vehicle-illumination device (18) according to any preceding claim, **characterized in that** the light source (28) is arranged in relation to the first reflector (24) such that the light source lies in an extension of a first reflector's rotation axis and that the first reflector has a radial extension which is just so large that the first reflector's reflection area is illuminated completely with the light coupled into the light guide from the light source.

3. Motor vehicle-illumination device (18) according to any of the preceding claims, **characterized in that** the indentation divides the light guide into a first half space (36) and a second half space (38), wherein the first half space lies between a first part of the first reflector and a light exit face (16) of the light guide lying in a narrow side of the light guide, and wherein the second half space lies between a second part of the first reflector and the second reflector.

4. Motor vehicle-illumination device (18) according to any of the preceding claims, **characterized in that** the light guide consists of polycarbonate.

5. Motor vehicle-illumination device (18) according to any of the preceding claims, **characterized in that** the first reflector is at least in sections rotationally symmetric and consists overall of single sections that are rotationally symmetric within a certain angular range, wherein the sum of the angular ranges result again in a full circle.

6. Motor vehicle-illumination device (18) according to any of the preceding claims, **characterized in that** the first reflector's reflection area is formed such, that light incident from the light source on the first reflector's reflection area experiences total internal reflections there.

7. Motor vehicle-illumination device (18) according to any of the preceding claims, **characterized in that**, the second half space features, in a plane perpendicular to the first reflector's rotation axis, a circle section-shaped contour, concentric to the first reflector's rotation axis, which borders the second reflector.

8. Motor vehicle-illumination device (18) according to claim 7, **characterized in that** the second reflector features, in a plane perpendicular to its circle section-shaped contour, a V-shaped contour, wherein the tip of the V points outwards and constitutes a 90°-angle and a leg of the angle encloses a 45°-angle with the first side and the angle's other leg encloses a 45°-angle with the second side.

9. Motor vehicle-illumination device (18) according to any of the preceding claims, **characterized in that** the reversed light's further path leads through between the first reflector and the second side past the first reflector in a distance to the first side that corresponds at least to the first reflector's certain depth.

## Revendications

1. Dispositif d'éclairage d'un véhicule automobile (18) avec un guide de lumière (10) qui comprend un premier côté (12), un deuxième côté (14) opposé au premier côté, et des côtés étroits situés entre un bord (12.1) du premier côté et un bord (14.1) du deuxième côté et reliant le premier côté au deuxième côté, ainsi qu'un premier réflecteur (24) et un deuxième réflecteur (26), le premier réflecteur étant un enfoncement sur le premier côté, qui s'étend jusqu'à une profondeur (d) déterminée dans le guide de lumière, **caractérisé en ce que** l'enfoncement présente une forme symétrique de rotation et **en ce que** la profondeur déterminée de l'enfoncement correspond à une valeur entre 40 % et 60 % de la distance, donnée à l'endroit de l'enfoncement, entre le premier côté et le deuxième côté, et **en ce qu'**une source de lumière (28) est disposée sur l'axe de rotation de l'enfoncement de façon telle que sa lumière soit couplée dans le guide de lumière par le deuxième côté et tombe sur le premier réflecteur, si bien que le premier réflecteur oriente radialement de la lumière incidente sur lui, sur le deuxième réflecteur, et le deuxième réflecteur étant agencé pour réorienter cette lumière deux fois et d'inverser, lors de cette réorientation, la direction de la lumière incidente sur lui, la réorientation étant effectuée de façon que le trajet suivant de la lumière réorientée passe entre le premier réflecteur et le deuxième côté en passant devant le premier réflecteur.

2. Dispositif d'éclairage d'un véhicule automobile (18) selon l'une des revendications précédentes, **caractérisé en ce que** la source de lumière (28) est disposée par rapport au premier réflecteur (24) de façon qu'elle soit située dans un prolongement d'un axe de rotation du premier réflecteur et **en ce que** le premier réflecteur présente une étendue radiale qui est juste assez grande pour que sa surface de réflexion soit illuminée complètement par la lumière couplée de la source de lumière dans le guide de lumière.

3. Dispositif d'éclairage d'un véhicule automobile (18) selon l'une des revendications précédentes, **caractérisé en ce que** l'enfoncement divise le guide de lumière en un premier demi-espace (36) et un second demi-espace (38), le premier demi-espace étant situé entre une première partie du premier réflecteur et une surface de sortie de lumière (16) du guide de lumière située dans un côté étroit du guide de lumière, et le second demi-espace étant situé entre une deuxième partie (44) du premier réflecteur et le deuxième réflecteur.

4. Dispositif d'éclairage d'un véhicule automobile (18) selon l'une des revendications précédentes, **caractérisé en ce que** le guide de lumière est en polycarbonate.

5. Dispositif d'éclairage d'un véhicule automobile (18) selon l'une des revendications précédentes, **caractérisé en ce que** le premier réflecteur est, au moins par zones, symétrique de rotation et est composé, dans son ensemble, de zones individuelles qui sont symétriques de rotation dans une zone angulaire déterminée, la somme des zones angulaires donnant à nouveau un cercle entier.

6. Dispositif d'éclairage d'un véhicule automobile (18) selon l'une des revendications précédentes, **caractérisé en ce que** la surface réfléchissante du premier réflecteur est formée de façon que de la lumière incidente sur elle et provenant de la source de lumière, est sujet à une réflexion totale interne.

7. Dispositif d'éclairage d'un véhicule automobile (18) selon l'une des revendications précédentes, **caractérisé en ce que** le second demi-espace présente, dans un plan perpendiculaire à l'axe de rotation du premier réflecteur, un contour en forme de section de cercle concentrique à l'axe de rotation qui délimite le deuxième réflecteur.

8. Dispositif d'éclairage d'un véhicule automobile (18) selon la revendication 7, **caractérisé en ce que** le deuxième réflecteur présente, dans un plan perpendiculaire à son contour en forme de section de cercle, un contour en forme de V, la pointe du V montrant vers l'extérieur et formant un angle de 90 ° et une branche de l'angle enfermant un angle de 45 ° avec le premier côté et l'autre branche de l'angle enfermant un angle de 45 ° avec le deuxième côté.

9. Dispositif d'éclairage d'un véhicule automobile (18) selon l'une des revendications précédentes, **caractérisé en ce que** le trajet suivant de la lumière réorientée passe entre le premier réflecteur et le deuxième côté en passant devant le premier réflecteur à une distance du premier côté qui correspond au moins à la profondeur déterminée du premier réflecteur.
